# EUROPÄISCHE PATENTSCHRIFT

(11) **EP 2 240 835 B1**
(45) Veröffentlichungstag und Bekanntmachung des Hinweises auf die Patenterteilung: **16.09.2015**
(21) Anmeldenummer: 09708969.2
(22) Anmeldetag: 05.02.2009
(51) Int. Cl.: G05B 19/4063

(54) **VERFAHREN ZUR BESTIMMUNG DER BEARBEITUNGSGÜTE VON BAUTEILEN INSBESONDERE BEI SPANENDER BEARBEITUNG DURCH NC MASCHINEN**
METHOD FOR DETERMINING THE MACHINING QUALITY OF COMPONENTS, PARTICULARLY FOR METAL CUTTING BY NC MACHINES
PROCÉDÉ DE DÉTERMINATION DE LA QUALITÉ D'USINAGE DE COMPOSANTS, EN PARTICULIER POUR L'USINAGE PAR ENLÈVEMENT DE COPEAUX PAR MACHINES NC

(30) Priorität: 08.02.2008 DE 102008008470
(43) Veröffentlichungstag der Anmeldung: 20.10.2010
(73) Patentinhaber: MTU Aero Engines AG, 80995 München (DE)
(72) Erfinder: ECKSTEIN, Martin, 82178 Puchheim (DE); BREITKOPF, Günter, 80638 München (DE); KNEILLING, Rolf, 86576 Rapperzell (DE)
(86) Internationale Anmeldenummer: PCT/DE2009/000159
(87) Internationale Veröffentlichungsnummer: WO 2009/097840

(56) Entgegenhaltungen:
- EP-A- 1 376 284
- US-A1- 2004 179 915
- DOLINSEK S ET AL: "An intelligent AE sensor for the monitoring of finish machining process" INTELLIGENT PROCESSING AND MANUFACTURING OF MATERIALS, 1999. IPMM '99. PROCEEDINGS OF THE SECOND INTERNATIONAL CONFERENCE ON HONOLULU, HI, USA 10-15 JULY 1999, PISCATAWAY, NJ, USA,IEEE, US, Bd. 2, 10. Juli 1999 (1999-07-10), Seiten 847-853, XP010351495 ISBN: 978-0-7803-5489-0
- KARALI PATRA ET AL: "Drill Wear Monitoring through Current Signature Analysis using Wavelet Packet Transform and Artificial Neural Network" INDUSTRIAL TECHNOLOGY, 2006. ICIT 2006. IEEE INTERNATIONAL CONFERENCE ON, IEEE, PI, 1. Dezember 2006 (2006-12-01), Seiten 1344-1348, XP031178093 ISBN: 978-1-4244-0725-5
- P. BHATTACHARYYA ET AL.: "Current Signal Based Continuous On-line Tool Condition Estimation in Face Milling" IEEE, [Online] 2006, XP002529392 Gefunden im Internet: URL:http://ieeexplore.ieee.org/stamp/stamp .jsp?arnumber=04237559> [gefunden am 2009-05-26]
- OZEL T ET AL: "Predictive modeling of surface roughness and tool wear in hard turning using regression and neural networks" INTERNATIONAL JOURNAL OF MACHINE TOOLS AND MANUFACTURE, ELSEVIER, US, Bd. 45, Nr. 4-5, 1. April 2005 (2005-04-01), Seiten 467-479, XP025333653 ISSN: 0890-6955 [gefunden am 2005-04-01]

## Beschreibung

Die vorliegende Erfindung betrifft ein Verfahren zur Qualitätskontrolle von vorzugsweise in Serienproduktion hergestellten Bauteilen.

Die Qualität von mit Hilfe eines Fertigungsverfahrens hergestellter Bauteile beeinflusst in starkem Maß deren Gebrauchseigenschaften und Lebensdauer. Dies gilt insbesondere für hoch beanspruchte Bauteile beispielsweise eines Gasturbinenflugtriebwerks. Hierbei bezieht sich die Qualität der Bauteile insbesondere auf deren Maßhaltigkeit, die statische und dynamische Festigkeit und/oder auf die Oberflächengüte in den bearbeiteten Bereichen.

Die gesuchte Qualität oder Bearbeitungsgüte von hergestellten bzw. bearbeiteten Bauteilen lässt sich zerstörungsfrei nur mit sehr großem Aufwand prüfen, wobei der Prüfungsvorgang zumeist dem Fertigungsprozess zeitlich nachgeschaltet ist. Beispielsweise bei der spanenden Bearbeitung von Werkstücken mit NC-Maschinen (Bohren, Fräsen, Drehen, Räumen, Schleifen) besteht insbesondere in einer Serienfertigung daher ein Bedarf daran, das Ergebnis des Bearbeitungsvorganges in quasi Echtzeit ohne Unterbrechung der Bearbeitungsvorganges bzw. des gesamten Fertigungsablaufes zu kennen. Diese Information ist jedoch ohne besondere Vorkehrungen und Einrichtungen nur nach Abschluss des Bearbeitungsvorganges durch zeitaufwändige und kostenintensive Messungen zu erhalten.

Der Einsatz solcher bekannten Einrichtungen, z.B. von Fotokameras mit automatischer Bildausrvertung, ist problematisch, weil sie für wichtige Qualitätskriterien nicht die erforderliche Empfindlichkeit (Auflösung) besitzen, ein Hindernis im Arbeitraum der Maschinen darstellen und/oder besonderer Wartung durch besonders fachkundiges Personal bedürfen. Daher sind Verfahren zur Überwachung eines Fertigungsverfahrens von Interesse, mit welchen auf die Qualität der hergestellten Bauteile quasi in Echtzeit geschlossen werden kann.

Aus der Praxis sind Verfahren zur qualitätsrelevanten Überwachung eines Fertigungsverfahrens grundsätzlich bekannt, bei welchen Signalverläufe von Parametern des Fertigungsverfahrens messtechnisch erfasst werden, wobei mehrere messtechnisch erfasste Signalverläufe, die einem korrekten und damit qualitativ hochwertigen Fertigungsablauf zugeordnet werden könnten, statistisch ausgewertet werden, um Sollverläufe für die messtechnisch erfassbaren Signalverläufe bereitzustellen. Zur qualitätsrelevanten Überwachung eines Fertigungsverfahrens werden dann messtechnisch erfasste Istverläufe der Signalverläufe mit den vorab ermittelten Sollverläufezt für die betreffenden Fertigungsschritte verglichen, wobei dann, wenn die Istverläufe von den Sollverläufen um mehr als ein definiertes Maß abweichen, auf ein qualitativ schlechtes Fertigungsverfahren und damit einen Qualitätsmangel am fertigen Bauteil geschlossen wird.

Konkreter ausgedrückt wird gemäß dem Stand der Technik das hinsichtlich der Bauteilqualität bzw. Bearbeitungsgüte zu überwachende Fertigungsverfahren in eine Abfolge von Einzelschritten oder Sektionen untergliedert, wobei für jeden Einzelschritt mindestens eine Signalschablone aus den Steuerbefehlen der Einzelschritte und/oder aus messtechnisch erfassten Zustandsgrößen generiert wird.

Diese Signalschablonen geben Sollverläufe für Signalverläufe bzw. Zeitreihen von Parametern des betreffenden Fertigungsverfahrens vor, wobei es sich bei diesen Signalschablonen entweder um theoretische, rechnerisch ermittelte Sollverläufe oder um aus realen Signalverläufen über statistische Auswertungen vorab generierter Sollverläufe handelt. Dies hat den Vorteil, dass das rechnerische Verfahren auch dann zur qualitätsrelevanten Überwachung eines Fertigungsverfahrens herangezogen werden kann, wenn Bauteile mit relativ kleinen Losgrößen mit dem zu überwachenden Fertigungsverfahren hergestellt werden sollen, wohingegen die analytische Bereitstellung von Signalschablonen eher bei der Serienfertigung ihre Anwendung findet. Diese vorstehend beschriebene gesamte Vorgehensweise findet prinzipiell auch bei der vorliegenden Erfindung ihre Anwendung und ist daher auch für das erfindungsgemäße Bestimmungsverfahren grundsätzlich gültig.

Es hat sich jedoch gezeigt, dass insbesondere das Erkennen auf Fertigungsgütemängel auf Basis der Signalschablonen in der Praxis erhebliche Probleme bereitet. So ist insbesondere bei komplexen Fertigungsprozessen sowie unter Einsatz komplizierter Bearbeitungsmaschinen der kausale Zusammenhang zwischen der zu bestimmenden Bearbeitungsgüte und der Signalschablone nicht oder nur unzureichend gegeben, sodass eine nachfolgende Korrelationsbetrachtung bei der Auswertung der erfassten Signalverläufe keine eindeutigen und damit verwertbaren Ergebnisse liefert.

Außerdem betreffen die zu interessierenden Bearbeitungsgüten an den bearbeiteten Stellen eines Bauteils jeweils
- deren Maßhaltigkeit,
- deren Oberflächenqualität
- sowie die Qualität des jeweiligen Randzonengeftiges.

Gemäß der bekannten Verfahren, bei denen mit Hilfe von Sensoren bestimmte Betriebs- und Verfahrensparameter gemessen werden, um daraus direkt oder mit Hilfe von Prozessmodellen entsprechende Kenngrößen des technologischen Zustandes des Bearbeitungsprozesses zu ermitteln, werden bereits unterschiedlich weitgehende numerische Verarbeitungen der Sensor-Signale nach unterschiedlichen mathematischen Verfahren und Strategien zeitnah bzw. in quasi Echtzeit eingesetzt. Jedoch kann ausschließlich der momentane Prozess-Zustand (siehe beispielsweise die US 5070655) oder der Verschleißzustand der Werkzeuge (siehe beispielsweise die US 5251144) ermittelt werden. Es sind auch entsprechende Verfahren und Vorrichtungen bekannt, die dabei ohne zusätzliche Sensoren auskommen und Informationen verwenden, die aus ohnehin vorhandenen Prozessgrößen wie der Leistung der Achsantriebe (z.B. Vorschub, Spindeldrehmoment) gewonnen werden (siehe hierzu beispielsweise die US 7206657). Auf der Basis der auf diese Weise online ermittelten Prozesszustände kann hierauf der Prozess durch Änderung von Verfahrensparametern optimiert werden. Die Optimierung kann mit unterschiedlichen Zielsetzungen erfolgen, wie z.B. minimaler Werkzeugverschleiß oder minimale Bearbeitungszeit (siehe hierzu insbesondere die US 4031368). Eine Optimierung direkt nach den vorstehend genannten drei wesentlichen Bearbeitungsgüten ist jedoch aufgrund der bereits geschilderten Probleme nicht bekannt.

US 2004/179915 A1 und der Artikel DOLINSEK S ET AL: "An intelligent AE sensor for the montoring of finish machining process" in ANTELLIGENT PROCESSING AND MANUFACTURING OF MATERIALS, IPMM '99 offenbaren beide ein Verfahren zur Bestimmung einer ausgewählten Bearbeitungsgüte von Bauteilen anhand von akustischen Vibrationssignalen, die bei dem Bearbeiten des Werkstücks entstehen. Diese Verfahren erfordern somit die Bereitstellung und Installation von sensiblen Sensoren zur Erfassung der akustischen Vibrationssignale.

Der Artikel KARALI PATRA ET AL: "Drill Wear Monitoring through Current Signature analysis using Wavelet Packet Transform and Artificial Neural Network" in IN-DUSTRY TECHNOLOGY, ICIT 2006 offenbart ein Verfahren, bei dem ein Hall-Effekt-Sensor verwendet wird, um den Verschleiß des Bohrwerkzeugs mit einer bestimmten Genauigkeit ermitteln zu können. Dieses Verfahren ist somit nicht auf die Bestimmung einer Bearbeitungsgüte von Bauteilen gerichtet.

Angesichts dieses Stands der Technik ist es eine Aufgabe der vorliegenden Erfindung, ein Verfahren bereit zu stellen, mit welchem eine Bestimmung zumindest einer, vorzugsweise aus den drei Genannten ausgewählten Bearbeitungsgüte in quasi Echtzeit ermöglicht wird.

Diese Aufgabe wird durch ein Verfahren mit den Verfahrensschritten gemäß dem Patentanspruch 1 gelöst. Vorteilhafte Weiterbildungen des erfindungsgemäßen Verfahrens sind Gegenstand der Unteransprüche.

Das erfindungsgemäße Verfahren zur Bestimmung einer ausgewählten Bearbeitungsgüte von Bauteilen bei einem Fertigungsprozess, insbesondere bei spanender Bearbeitung sieht demnach zumindest die folgenden Verfahrensschritte vor:
- Erfassung von Zeitreihen von prozessrelevanten Größen durch Sensoren und/oder aus dem Datenstrom in der Maschinensteuerung, wobei die prozessrelevanten Größen Motorströme, Drehzahlen und/oder Schnittkräfte sind,
- Extraktion von Zeitabschnitten, bei denen ein Werkzeug innerhalb einer Bearbeitungssequenz im Eingriff am Bauteil ist, aus der Zeitreihe einer der prozessrelevanten Größen,
- Zerlegung der extrahierten Zeitabschnitte in Sektionen, wobei die Anzahl der Sektionen abhängig von der jeweiligen Bearbeitungssequenz ist,
- Ermittlung folgender Merkmale:
   o die Länge der jeweiligen Sektion,
   o die Koeffizienten in der jeweiligen Sektion verlaufenden Regressionsgerade, und
   o die Varianz der Residuen um die in der jeweiligen Sektion verlaufenden Regressionsgerade,
- multivariate Verknüpfung der ermittelten Merkmale zu einem zu der ausgewählten Bearbeitungsgüte korrelierenden Merkmalsmuster.

Durch das vorstehend konkretisierte erfindungsgemäße Verfahren können kostspielige und zeitaufwändige off line Qualitätsprüfungen nach Art und Umfang verringert werden. Damit verringert sich insgesamt der Prüfungsaufwand. Des weiteren lässt sich die Qualitätskontrolle auf kritische Fälle konzentrieren, wodurch die Qualitätssicherheit erhöht wird. Schließlich kann zur Erreichung einer Prozessoptimierung durch Änderung von Prozessparametern im Rahmen einer adaptiven Regelung der Fertigungsprozess nur noch mit einem Bauteil-Merkmal als Regelgröße gefahren werden.

Die Erfindung wird nunmehr nachstehend anhand eines bevorzugten Ausführungsbeispiels unter Bezugnahme auf die begleitenden Zeichnungen näher erläutert.
Fig. 1 zeigt beispielhaft eine Zeitreihe des Motorstroms eines Werkzeugvorschubantriebs im Fall des Fertigungsprozesses "Bohren",
Fig. 2 zeigt eine Anzahl extrahierter Motorstrom-Zeitreihen mehrerer Bohrsequenzen,
Fig. 3 zeigt eine Motorstrom-Zeitreihe gemäß Fig. 1 in Sektionen unterteilt und
Fig. 4 zeigt gemessene Rauhtiefenwerte als eine ausgewählte Bearbeitungsgute im Vergleich mit erfindungsgemäß ermittelten Werten.

Wie bereits vorstehend ausgeführt wurde, werden zur Ermittlung von erfindungsgemäß ausgewählten Qualitätseigenschaften der Bauteile, insbesondere der Maßhaltigkeit, der Oberflächenqualität sowie der Qualität des jeweiligen Randzonengefuges der Bauteile an den bearbeiteten Stellen prozessrelevante Größen erfasst (durch Applikation einer Anzahl von Sensoren) oder ermittelt (durch Zugriff auf den Datenstrom in der Maschinensteuerung beispielsweise einer NC-Bearbeitungsmaschine). Diese prozessrelevanten Größen können sein:
- Motorströme an einem Vorschubantrieb fUr das Werkzeug (beispielsweise Bohrer) oder an dem Werkzeugantrieb selbst,
- Drehzahlen und/oder Drehmomente am Werkzeug,
- Bearbeitungszeitsequenzen und/oder Anzahl von Bearbeitungsdurchläufen etc.

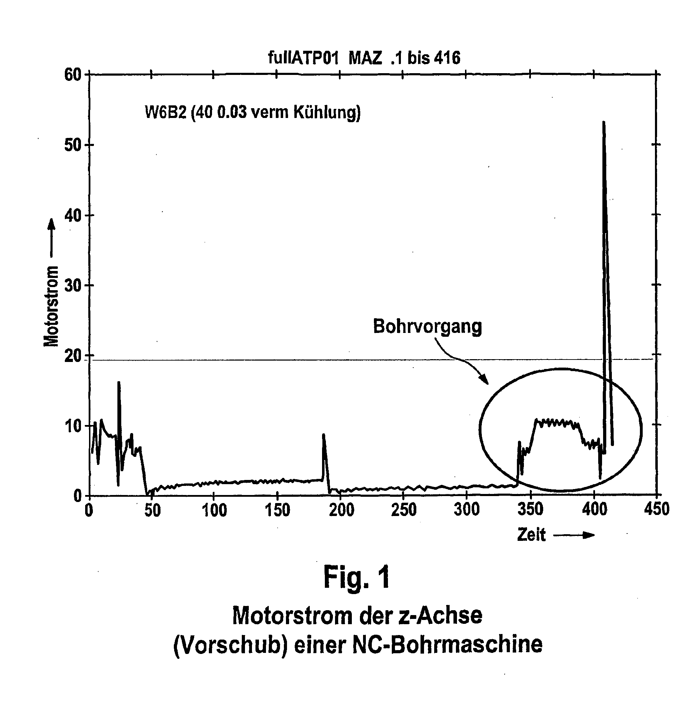

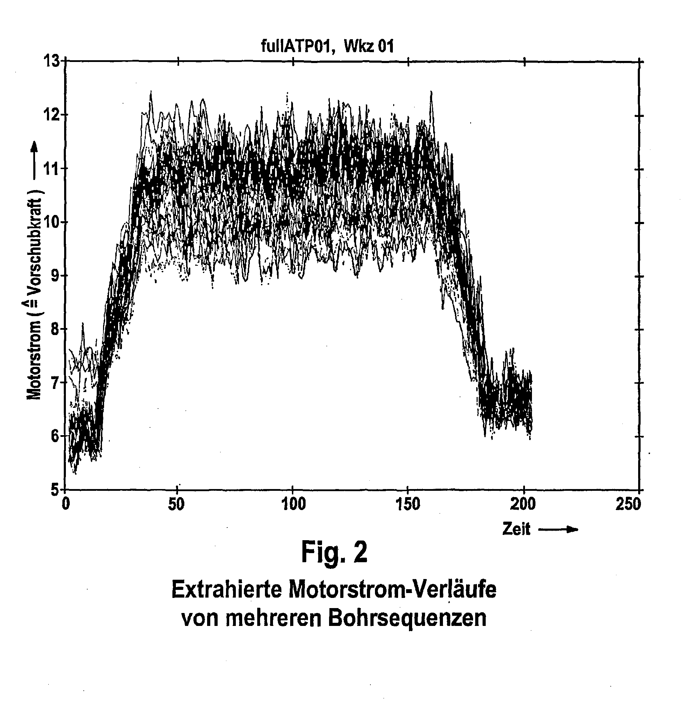

Die prozessrelevanten Größen werden dann als synchrone Zeitreihen für die Verarbeitung in einer erfindungsgemäßen Einrichtung zur digitalen Datenverarbeitung bereitgestellt. Die Fig. 1 zeigt als ein bevorzugtes Bespiel den zeitlichen Motorstromverlauf der z-Achse (Vorschub) einer NC-Bohrmaschine. Wie hieraus zu ersehen ist, beschreibt der Motorstromverlauf in charakteristischer und damit reproduzierbarer Weise einen Bohrdurchlauf beginnend mit Anfahren der Maschine, Ansetzen des Bohrwerkzeugs am Bauteil, Spanbearbeitung und Abschalten der Kühlmittelzufuhr am Ende der Spanbearbeitung.
Aus diesen in Fig. 1 dargestellten Zeitreihen werden zur weiteren Auswertung mit geeigneten mathematischen Verfahren diejenigen Abschnitte extrahiert, bei denen das Werkzeug im Eingriff am Werkstück ist, d.h. die weitere Auswertung der Zeitreihen konzentriert sich im wesentlichen nur noch auf die vorstehend genannte Spanbearbeitungssequenz. In der Fig. 2 sind zur Verdeutlichung eine Anzahl extrahierter Motorstrom-Verläufe bezogen auf die Spanbearbeitungssequenz von mehreren Bohrdurchläufen dargestellt.

Diese Extraktion erfolgt durch Verfahren der Mustererkennung, wobei das gesuchte Muster entweder aus einer mitlaufenden (Teil-)Modellierung des Prozesses bereitgestellt wird, oder zuvor im off line Modus durch Modellierung oder Messung bestimmt wurde. Beide Extraktionsverfahren zählen bereits zum Stand der Technik gemäß den eingangs genannten Druckschriften, sodass an dieser Stelle auf die betreffenden Veröffentlichungen hingewiesen werden kann.

Im vorliegenden erfindungsgemäßen Beispiel wird die Extraktion durch Vergleich (Kreuzkorrelation) der Zeitreihe mit einem zuvor analytisch ermittelten (Muster-)Verlauf erhalten, der typisch ist für den Verlauf des jeweiligen Signals (bzw. der Größe) in der jeweiligen Bearbeitungsperiode. Bei der Extraktion können aber auch wie bereits beschrieben die Informationen herangezogen werden, die aus den Befehlen der NC-Programmbefehle gewonnen werden können, die zur jeweiligen Bearbeitungssequenz gehören.

Aus den extrahierten Datensequenzen werden im betreffenden Zeitbereich und/oder im Frequenzbereich eine Anzahl von Merkmalen derart und in solcher Zahl gewonnen, dass sie im Fall einer geeigneten Verknüpfung einen eindeutigen Schluss auf die gesuchten Bearbeitungsgüten zulassen. Um diese Eindeutigkeit der Zuordnung zu erreichen, ist im Regelfall eine multivariate, vorzugsweise nichtlineare Verknüpfung der gewonnenen Merkmale erforderlich.

Konkreter ausgedrückt ist der zeitliche Verlauf einer einzigen prozessrelevanten Größe ggf. zwar charakteristisch für den betreffenden Bearbeitungsvorgang, reicht aber per se für einen eindeutigen Rückschluss auf eine bestimmte, ausgewählte Bearbeitungsgüte nicht aus. Erst in dem Fall, dass mehrere Zeitreihen unterschiedlicher prozessrelevanter Größen miteinander verknüpft werden, ist eine Korrelation des Verknüpfungsergebnisses zu der gesuchten Bearbeitungsgüte erkennbar.

Im vorliegenden Fall werden daher die extrahierten Zeitreihen-Abschnitte wie in Bild 3 gezeigt, in Sektionen zerlegt. Dabei wird die Anzahl der Sektionen in Abhängigkeit vom jeweiligen Bearbeitungsvorgang vorgegeben. Im Beispielfall "Bohren" eines Loches sind dies 5 Sektionen.

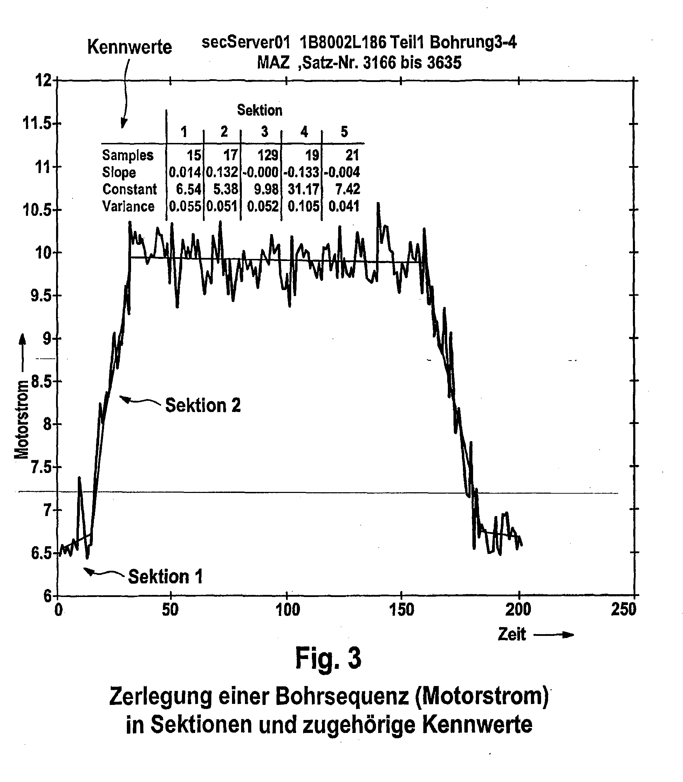

In den einzelnen Sektionen werden dann beispielhaft als Merkmale die folgenden Kennwerte bestimmt:
- die Länge der jeweiligen Sektion,
- der mittlere Verlauf (Koeffizienten der Regressionsgeraden) und
- die Varianz der Residuen um die Regressionsgeraden.
Die Verknüpfung dieser beispielhaften Merkmale zu einem Merkmalsmuster mit eindeutigem Zusammenhang zu einer gesuchten Bauteils-Bearbeitungsgüte ist hier beispielhaft vorgenommen durch Training eines Neuronalen Netzes. Dabei wurden die Signal-Merkmale entsprechend der Fig. 3 für eine Folge von Bohrungen (im vorliegenden Beispiel 34 Bohrungen) aufgenommen, die mit demselben Werkzeug ausgeführt wurden. Für diese Bohrungen wurde als Bauteil-Bearbeitungsgüte die "Rauhtiefe der Bohrungswandung" gemessen und als Zielgröße für das Netztraining verwendet. Mit dem auf diese Weise trainierten Neuronalen Netz wurde sodann für weitere Bohrungen aus den verknüpften Signal-Merkmalen die Rauhtiefe durch ein entsprechendes Korrelationsverfahren bestimmt und das Ergebnis anhand tatsächlich gemessener Werte auf dessen Aussagekraft geprüft.

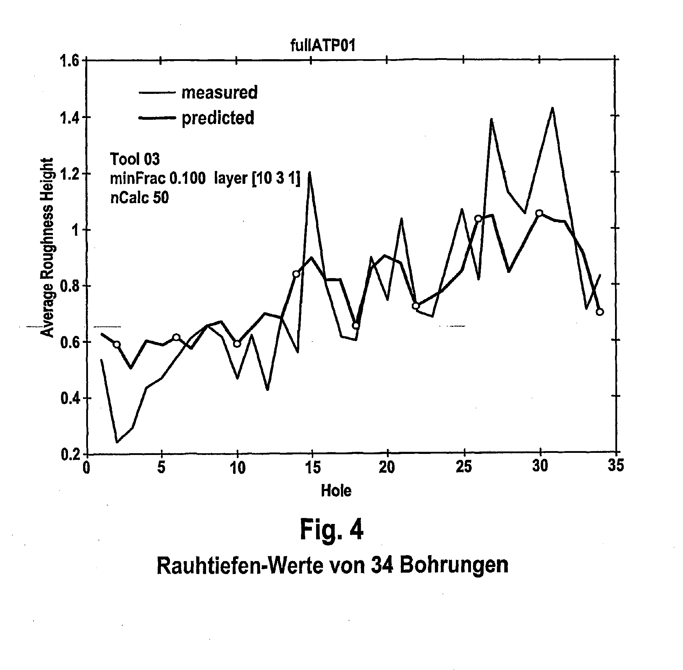

Die Fig. 4 zeigt diese tatsächlich gemessenen Rauhtiefenwerte und die Werte, die aus den vorstehend genannten Merkmalen mit Hilfe des Neuronalen Netzes nach dem erfindungsgemäßen Merkmalsverknüpfungsverfahren ermittelt wurden.

Es ist zu sehen, dass mit zunehmender Ordnungszahl der Bohrung (Abszisse) die Rauhtiefe infolge des zunehmenden Werkzeugverschleißes tendenzmäßig ansteigt. Dieser Anstieg ist sowohl bei den gemessenen Kontrollwerten wie auch bei denn prognostizierten Werten eindeutig zu erkennen. Die im Diagramm zu beobachtenden Abweichungen zwischen den gemessenen Werten und NN-Ergebnissen haben ihre Ursache in
- der versuchstechnisch nur begrenzten Zahl von Bohrsequenzen für das NetzTraining,
- den sachbedingten Ungenauigkeiten bei der Messung von Rauhtiefen, sowie
- der unvollständigen Erfassung der Signal-Charakteristika.

Die hier erreichte sowie in Fig. 4 dokumentierte Genauigkeit (Korrelationsqualität) ist jedoch bereits als praxisrelevant anzusehen und bestätigt die prinzipielle Fähigkeit des erfindungsgemäßen Verfahrens zur beispielhaften Bestimmung der Rauhtiefe aus den vorstehend ausgewählten und miteinander verknüpften Signalmerkmalen.

## Patentansprüche

1. Verfahren zur Bestimmung einer ausgewählten Bearbeitungsgüte von Bauteilen bei einem Fertigungsprozess, insbesondere bei spanender Bearbeitung, mit zumindest den folgenden Verfahrensschritten:
- Erfassung von Zeitreihen von prozessrelevanten Größen durch Sensoren und/oder aus dem Datenstrom in der Maschinensteuerung, wobei die prozessrelevanten Größen Motorströme, Drehzahlen und/oder Schnittkräfte sind,
- Extraktion von Zeitabschnitten, bei denen ein Werkzeug innerhalb einer Bearbeitungssequenz im Eingriff am Bauteil ist, aus der Zeitreihe einer der prozessrelevanten Größen,
- Zerlegung der extrahierten Zeitabschnitte in Sektionen, wobei die Anzahl der Sektionen abhängig von der jeweiligen Bearbeitungssequenz ist,
- Ermittlung folgender Merkmale:
∘ die Länge der jeweiligen Sektion,
∘ die Koeffizienten in der jeweiligen Sektion verlaufenden Regressionsgerade, und
∘ die Varianz der Residuen um die in der jeweiligen Sektion verlaufenden Regressionsgerade,
- multivariate Verknüpfung der ermittelten Merkmale zu einem zu der ausgewählten Bearbeitungsgüte korrelierenden Merkmalsmuster.

2. Verfahren nach Anspruch 1, **dadurch gekennzeichnet, dass**
- als Bearbeitungsgüte die Maßhaltigkeit des Bauteils, die Oberflächenqualität und/oder die Qualität des Randzonengefüges ausgewählt wird.

3. Verfahren nach einem der vorstehenden Ansprüche, **dadurch gekennzeichnet, dass**
- die Extraktion des/der charakteristischen Größenverläufe durch einen Vergleich von aus den ermittelten Größen erhaltenen Zeitreihen mit einem Musterverlauf erhalten wird, der entweder als theoretischer Verlauf mathematisch berechnet oder zuvor über eine Anzahl von Testläufen analytisch ermittelt wird.

4. Verfahren nach einem der vorstehenden Ansprüche, **dadurch gekennzeichnet, dass**
- die Verknüpfung der Merkmale zu dem Merkmalsmuster durch Trainieren eines Neuronalen Netzes vorgenommen wird, wobei die Verknüpfung vorzugsweise nichtlinear erfolgt.

## Claims

1. A method for determining a selected machining quality of components in a manufacturing process, in particular during machining, having at least the following method steps:
- acquisition of time series of process-relevant variables by sensors and/or from the data stream in the machine control, wherein the process-relevant variables are motor currents, rotational speeds and/or cutting forces,
- extraction of time segments, in which a tool is in engagement at the component within a machining sequence, from the time series of one of the process-relevant variables,
- splitting of the extracted time segments into sections, wherein the number of sections is dependent upon the respective machining sequence,
- determination of the following characteristics:
o the length of the respective section,
o the coefficients of linear regression extending in the respective section, and
o the variance of the residuals about the linear regression extending in the respective section,
- multivariate linking of the determined characteristics to form a characteristic pattern correlating with the selected machining quality.

2. A method according to claim 1, **characterised in that**
- the dimensional accuracy of the component, the surface quality and/or the quality of the edge-zone structure are/is selected as the machining quality.

3. A method according to one of the preceding claims, **characterised in that**
- the extraction of the characteristic variable curve(s) is obtained by means of a comparison of time series, obtained from the determined variables, with a pattern curve that is either calculated mathematically as a theoretical curve or is determined beforehand analytically by way of a number of test runs.

4. A method according to one of the preceding claims, **characterised in that**
- the linking of the characteristics to form the characteristic pattern is carried out by training a neural network, wherein the linking is preferably effected in a non-linear manner.

## Revendications

1. Procédé de détermination d'une qualité d'usinage sélectionnée de composants pour un processus de fabrication, en particulier d'usinage par enlèvement de copeaux, comprenant au moins les étapes suivantes :
- détermination de séries chronologiques de grandeurs relatives au processus par des capteurs et/ou à partir du flux de données dans la commande de machine, les grandeurs relatives au processus étant des courants de moteur, des vitesses de rotation et/ou des forces de coupe,
- extraction, dans la série chronologique d'une des grandeurs relatives au processus, de périodes où un outil est en contact avec le composant pendant une séquence d'usinage,
- décomposition des périodes extraites en sections, le nombre de sections étant fonction de la séquence d'usinage respective,
- détermination des caractéristiques suivantes :
o longueur de la section respective,
o coefficients de la droite de régression qui s'étend dans la section respective, et
o variance des résidus par rapport à la droite de régression qui s'étend dans la section respective,
- association multivariée des caractéristiques déterminées en un modèle de caractéristiques corrélé à la qualité d'usinage sélectionnée.

2. Procédé selon la revendication 1, **caractérisé en ce que**
- la stabilité dimensionnelle du composant, la qualité de surface et/ou la qualité de structure des zones de bord sont sélectionnées comme qualité d'usinage.

3. Procédé selon l'une des revendications précédentes, **caractérisé en ce que**
- l'extraction de la/des courbes de grandeur caractéristiques est réalisée par comparaison de séries chronologiques obtenues à partir des grandeurs déterminées avec une courbe modèle, laquelle est soit mathématiquement calculée en tant que courbe théorique, soit préalablement déterminée au moyen d'un certain nombre d'essais.

4. Procédé selon l'une des revendications précédentes, **caractérisé en ce que**
- l'association des caractéristiques en un modèle de caractéristiques est effectuée par apprentissage d'un réseau neuronal, l'association étant de préférence non linéaire.
